# EUROPÄISCHE PATENTSCHRIFT

(11) **EP 0 372 316 B1**
(45) Veröffentlichungstag und Bekanntmachung des Hinweises auf die Patenterteilung: **22.12.1993**
(21) Anmeldenummer: 89121731.7
(22) Anmeldetag: 24.11.1989
(51) Int. Cl.: A61C 7/12

(54) **Vorrichtung zur kieferorthopädischen Zahnbehandlung**
Orthodontic treatment device
Dispositif de traitement orthodontique

(30) Priorität: 07.12.1988 DE 3841202
(43) Veröffentlichungstag der Anmeldung: 13.06.1990
(73) Patentinhaber: Jeckel, Norbert, Dr., D-79224 Umkirch (DE)
(72) Erfinder: Jeckel, Norbert, Dr., D-79224 Umkirch (DE)
(74) Vertreter: Schmitt, Hans, Dipl.-Ing.

(56) Entgegenhaltungen:
- FR-A- 2 368 932
- US-A- 3 849 885
- US-A- 4 468 196
- US-A- 4 480 994

## Beschreibung

Die Erfindung betrifft eine Vorrichtung zur kieferorthopädischen Zahnbehandlung gemäß dem Oberbegriff von Anspruch 1.

Ziel von häufig durchgeführten kieferorthopädischen Behandlungen ist, die Molaren, das heißt die Mahlzähne, und insbesondere die Zähne 6 und 7 des Ober- oder Unterkiefers beidseitig zu distalisieren und im zu behandelnden Kiefer zu verlagern. Dies erfolgt beispielsweise, um eine krankhafte, versetzte Position der Zähne in Bißstellung von Ober- und Unterkiefer zu korrigieren und eine Angel-Klasse I-Beziehung zu erzielen.

Zu diesem Zweck hat man u. a. bereits eine Vorrichtung geschaffen, die im wesentlichen aus einem etwa U-förmigen, an den Seitenzähnen angreifenden sogenannten Innenbogen sowie einen im Bereich der Mundöffnung damit verschweißten, ebenfalls etwa U-förmigen sogenannten Außenbogen besteht. Die zur Distalisation notwendige Kraft wird bei dieser vorbekannten Vorrichtung über ein elastisches Nackenband erzeugt, welches die beiden hakenförmigen Enden des Außenbogens miteinander verbindet. Die beiden freien Enden des Innenbogens sind jeweils in ein Verankerungsröhrchen einsteckbar, das mit einem der zu behandelnden Seitenzähne über ein an dem Zahn zementiertes, sogenanntes Zahn- oder Molarenband verbunden ist. Dabei wird die Einschubtiefe der Innenbogen-Enden durch sogenannte Stops festgelegt, so daß gleichzeitig die vom Nackenband erzeugte Distalisationskraft auf die zu behandelnden Seitenzähne übertragen wird.
Bei dieser vorbekannten Vorrichtung werden die miteinander verschweißten und als sogenannter Headgear bezeichneten Außen- und Innenbögen durch Kontourieren der Drahtbögen individuell angepaßt; sie sind somit nur für eine Behandlung verwendbar. Nicht selten erfordert die Behandlung eines Patienten sogar mehrere, individuell angepaßte Headgears. Die vorbeschriebene Vorrichtung kann lediglich zur Distalisation der Molaren im Oberkiefer eingesetzt werden, da bei einer Verlagerung der Molaren im Unterkiefer durch die vom Nackenband erzeugte Distalisationskraft die Gefahr einer Schädigung der Kiefergelenke besteht.

Aus wissenschaftlichen Untersuchungen ist bekannt, daß ein Behandlungserfolg bei der Verlagerung der Zähne erst einsetzt, wenn die zu deren Distalisation notwendige Vorrichtung immerhalb von 24 Stunden mehr als 10 Stunden ununterbrochen getragen wird. Als Mindesttragdauer derartiger Vorrichtungen werden etwa 12 bis 14 Stunden täglich empfohlen. Dazu müssten Patienten die vorbeschriebene, bekannte Vorrichtung zumindest über die Nacht, aber auch tagsüber mehrere Stunden tragen. Dem stehen jedoch die Gefahr eines gestörten Nachtschlafes und ein Verletzungsrisiko z. B. beim unbeabsichtigten Lösen des Headgears gegenüber. Außerdem ist diese vorbekannte Vorrichtung für jedermann am Patienten sichtbar und wird von diesem auch deshalb als störend empfunden. Aus den vorerwähnten Gründen wird das Tragen dieser bekannten Vorrichtung nicht selten vom Patienten vernachläßigt, wodurch der Behandlungserfolg ausbleiben kann.

Um Nachteile der vorbeschriebenen Vorrichtung zu vermeiden, hat man auch bereits eine Vorrichtung geschaffen, bei der die Distalisationskraft intraoral durch gegenpolig sich gegenüberliegende, einander abstoßende Magnete erzeugt wird. Nachteilig ist daran u. a., daß sie vom Patienten während einer eventuell mehrwöchigen Behandlungsdauer ununterbrochen getragen werden muß. Das kann nicht nur zu Störungen im Knochengewebe führen, sondern dadurch wird auch das Reinigen der Zähne während der Behandlungsdauer erheblich behindert. Ferner muß diese Vorrichtung aufwendig individuell an den Kiefer des Patienten angepaßt werden.

Schließlich ist aus der US-PS 4 468 196 eine Vorrichtung der eingangs erwähnten Art zur Verlagerung oder Distalisation der Molaren im Kiefer eines Patienten bekannt, die einen U-förmigen und als Zahnschiene dienenden Drahtbügel hat. Diese Zahnschiene greift mit den beiden freien Enden ihrer U-Form an zwei Zahnbändern an, die auf beiden Seiten des Kiefers an jeweils einem zu behandelnden Molaren befestigt sind. Dazu ist an jedem der Zahnbänder ein Verankerungsröhrchen angebracht, in das eines der freien Enden der U-förmigen Zahnschiene lösbar einschiebbar ist. Die Verankerungsröhrchen werden von jeweils einer Druckfeder beaufschlagt, welche die benötigte Distalisationskraft aufbringen, auf den entsprechenden freien Endbereich der Zahnschiene aufgeschoben sind und denen auf der dem Verankerungsröhrchen abgewandten Seite der Druckfeder ein Stop oder dergleichen als Widerlager zugeordnet ist.

Die Zahnschiene dieser vorbekannten Vorrichtung beaufschlagt den vorderen Zahnreihenbereich des Patienten intraoral auf der Innenseite der Zähne. Die Zahnschiene weist dazu im Bereich des Quersteges ihrer U-Form eine an die Zahninnenseite der Zähne bereichsweise formangepaßte Widerlager-Platte auf. In diese Platte ist ein weiterer Drahtbügel eingeformt, der den innenseitig von der Widerlager-Platte beaufschlagten Zahnreihenbereich auf der Außenseite mit Abstand umgibt und als Labialbogen ausgebildet ist. Nachteilig bei dieser aus der US-PS 4 468 196 vorbekannten Vorrichtung ist, daß deren Zahnschiene mit der Widerlager-Platte an die Zähne innenseitig nur angelagert wird, wodurch auf diesen vorderen Zahnreihenbereich eine lediglich punktuell an den Zähnen angreifende reziproke Kraft einwirkt. Die reziproke Kraft ist aus Therapiegründen jedoch zu minimieren, weil sich andernfalls die zur Abstützung der Vorrichtung verwendeten Zähne unter dieser Krafteinwirkung relativ zueinander verschieben können.

Es besteht daher die Aufgabe, eine Vorrichtung der eingangs erwähnten Art zu schaffen, die vom Patienten während der Behandlung vergleichsweise weniger störend empfunden wird, die leicht zu reinigen ist und die auch die Zahnsubstanz nur wenig beeinträchtigt. Dabei soll das Verletzungsrisiko zu vernachlässigen sein. Es soll diese Vorrichtung sowohl im Oberkiefer als auch im Unterkiefer möglichst vielseitig eingesetzt werden können und nur wenig Aufwand in der Herstellung sowie bei ihrer Verwendung und Anpassung an unterschiedliche Einzelfälle erfordern.

Die erfindungsgemäße Lösung dieser Aufgabe besteht bei der Vorrichtung der eingangs erwähnten Art in den kennzeichnenden Merkmalen des Anspruches 1.

Da das in einem Zahnreihenbereich angreifende Widerlager als Zahnschiene ausgebildet ist, kann man bei der erfindungsgemäßen Vorrichtung auf weitere, die Widerlager-Zahnschiene an den Zähnen fest verankernde Zahnbänder oder dergleichen verzichten. Dabei kann die Widerlager-Zahnschiene die von der Spanneinrichtung oder dergleichen bewirkte Distalisationskraft gut aufnehmen und derart an die zu behandelnden Seitenzähne weitergeben, daß nur diese und praktisch nicht die von der Widerlager-Zahnschiene umgebenen Zähne verlagert werden. Außerdem kann die einen Zahnreihenbereich formangepaßt umgebende Widerlager-Zahnschiene zum Reinigen der Zähne sowie der Vorrichtung selbst leicht von den Zähnen abgehoben werden. Dadurch kann man weitestgehend vermeiden, daß die Zahnsubstanz durch die Zahnschiene und die Spanneinrichtung kariesgefährdet wird. Auch gestattet eine entsprechende Ausbildung der Vorrichtung, daß diese vollständig im Mund untergebracht und die Distalisationskraft ausschließlich intraoral erzeugt wird. Auf einen vom Patienten als störend empfundenen Außenbogen kann ebenso verzichtet werden wie auf ein Nackenband. Dementsprechend entfällt auch eine Beeinträchtigung der Nackenmuskulatur und der Halswirbelsäule durch die Zugkraft des elastischen Nackenbandes; auch tritt eine Gefährdung des Patienten beim unbeabsichtigten oder mutwilligen Herausziehen der Vorrichtung aus ihrer Verankerung an den Zähnen nicht ein. Die erfindungsgemäße Vorrichtung kann auch beim Unterkiefer eingesetzt werden, da sich die Distalisationskraft durch die intraorale Krafterzeugung praktisch nicht mehr auf die Kiefergelenke auswirken kann. Wegen der einfachen Einsetzbarkeit der Widerlager-Zahnschiene auf die Zähne ist die Vorrichtung auch vom Patienten selbst handhabbar. Die Widerlager-Zahnschiene und die Spanneinrichtung sind nur bei näherem Hinsehen von Dritten zu bemerken, was die Akzeptanz des Gerätes beim Patienten deutlich erhöht. Dies begünstigt ein gewissenhaftes Tragen einer derartigen Vorrichtung während einer längeren Behandlungszeit.

Weiterbildungen der Erfindung sind in den Unteransprüchen aufgeführt. So ist es vorteilhaft.

Um die Vorrichtung möglichst sicher und fest in dem zu behandelnden Kiefer zu halten, ist es vorteilhaft, wenn die Widerlager-Zahnschiene eine dem Gaumen formangefaßte Gaumenplatte aufweist, die einstückig mit der Widerlager-Zahnschiene verbunden ist. Dadurch sind eine gute und kippsichere Abstützung des Widerlagers gegen die von der Spanneinrichtung erzeugte Distalisationskraft begünstigt und ferner ist es zweckmäßig, wenn die Widerlager-Zahnschiene den vorderen Zahnreihenbereich umgibt und sich beidseitig zweckmäßigerweise bis zum einschließlich dritten Zahn, vorzugsweise bis zum einschließlich fünften Zahn der rechten und linken Kieferhälfte erstreckt. Dadurch wird ein großer Bereich der Zahnreihe von der Widerlager-Zahnschiene formangepaßt umgeben, so daß praktisch nur die zu distalisierenden Seitenzähne und nicht die von der Widerlager-Zahnschiene umgebenden Zähne in ihrer Lage verändert werden.
Eine im wesentlichen als tiefgezogenes Kunststoffteil ausgebildete Widerlager-Zahnschiene kann einfach und dem vorderen Zahnreihenbereich gut formangepaßt hergestellt werden, besonders wenn es einstückig ausgebildet ist. Dabei ist es während des Ziehvorganges auch gut möglich, Teile der Spanneinrichtung od. dgl. in die Widerlager-Zahnschiene zu integrieren.

Es ist vorteilhaft, wenn bei der Vorrichtung die Spanneinrichtung, ein Kraftübertragungsbogen od. dgl. Distanzhalter über eine vorzugsweise steckbare Verbindung lösbar mit den Seitenzahn-Anschlußstellen verbunden ist, die zweckmäßigerweise Seitenzähne umgebende Zahnbänder od. dgl. Zahnbefestigungsmittel aufweisen. Die Verwendung von Zahnbändern bei entsprechenden Verstelleinrichtungen ist an sich bekannt (vgl. z.B. DE-PS 27 44 740). Derartige Zahnbänder haben sich in der Praxis bewährt. Anstelle von Zahnbändern können aber auch z.B. Kunststoffklebeverbindungen als Zahnbefestigungsmittel dienen.

Eine vorteilhafte Ausbildung der Vorrichtung besteht darin, daß die Seitenzahn-Anschlußstellen jeweils eine etwa parallel zur benachbarten Zahnreihe verlaufende Führungs- und Einschubhülse od. dgl. Aufnahmeeinrichtung für die Einsteckenden aufweisen, die in diesen Einschubhülsen verschiebbar sind, wobei die Lage der Einschubhülsen derart auf die Lage einer in Höhe der Schneidezahn-Vorderfläche angeordneten Kupplung der Widerlager-Zahnschiene abgestimmt sind, daß die Spanneinrichtung in Betriebsstellung mit ihrem bei den Schneidezähnen befindlichen Mittelabschnitt mindestens in Höhe einer Kupplung von der Spanneinrichtung mit der Zahnschiene oder cranial davon zu liegen kommt. Dabei bedeutet "cranial" :"höher schädelwärts" oder "höher kalottenwärts". Bei einer derartigen Anordnung der Kupplungsstelle zwischen Spanneinrichtung und Zahnschiene erhält man ggf. eine zusätzliche, schädelwärts gerichtete Kraftkomponente auf die Zahnschiene, so daß deren Halt zusätzlich verbessert wird. Man vermeidet jedenfalls, daß aus den Kräften der Spanneinrichtung eine Kraftkomponente entsteht, die in Richtung des Lösens der Zahnschiene wirken könnte.

Zusätzliche Weiterbildungen der Erfindung ergeben sich aus der folgenden Beschreibung von Ausführungsbeispielen der Erfindung in Verbindung mit weiteren Ansprüchen und der Zeichnung. Die einzelnen Merkmale können je für sich oder zu mehreren bei einer Ausführungsform der Erfindung verwirklicht sein. Es zeigt etwas schematisiert :
- Fig. 1: eine Teil-Aufsicht von unten auf ein Oberkiefer-Modell, an dem eine Vorrichtung zum Distalisieren angebracht ist,
- Fig. 2: eine Seitenansicht einer Vorrichtung ähnlich der nach Fig. 1, die an einem Oberkiefer-Modell angeordnet ist,
- Fig. 3: eine Frontansicht der Vorrichtung gemäß Fig. 1 u. 2,
- Fig. 4: eine Aufsicht auf den Gaumen eines Oberkiefer-Modells und auf eine Vorrichtung, die gegenüber der von Fig. 1 etwas abgewandelt ist,
- Fig. 5: eine Seitenansicht der Vorrichtung gemäß Fig. 4 nebst Oberkiefer-Modell,
- Fig. 6: eine Frontansicht der Vorrichtung gemäß Fig. 4 und 5,
- Fig. 7: eine Einzelheit aus der Vorrichtung gemäß Fig. 4,
- Fig. 8: eine etwas abgewandelte Ausführungsform der Vorrichtung, die an einem Unterkiefer-Modell angebracht und deren Außenbügel entspannt ist, sowie
- Fig. 9: eine Vorrichtung analog Fig. 8 bei gespanntem Außenbügel.

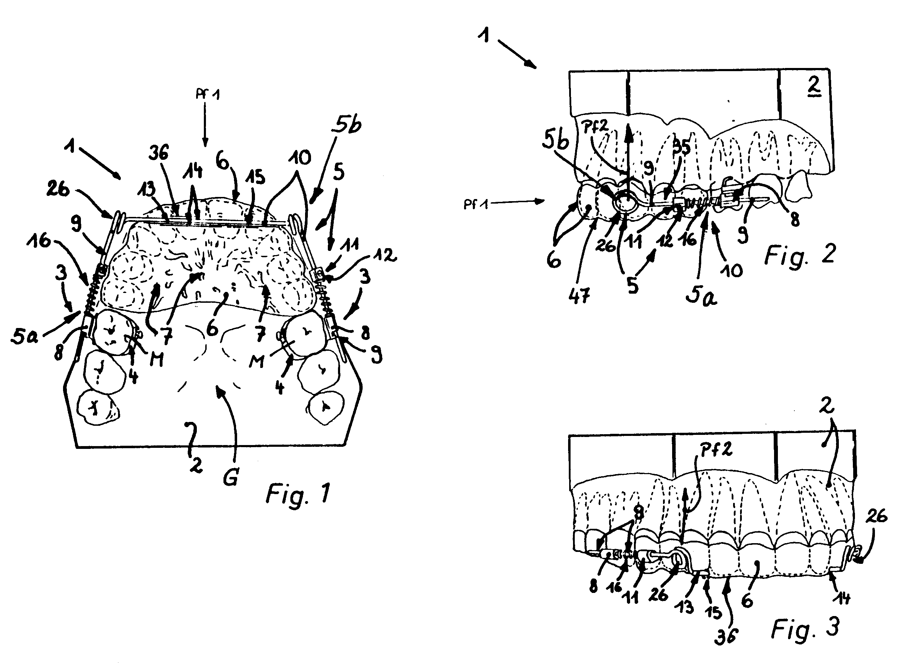

Die in den Figuren 1 bis 9 dargestellte, im ganzen mit 1 bzw. 101 bezeichnete Vorrichtung dient zur kieferorthopädischen Zahnbehandlung. Sie eignet sich insbesondere zur Verlagerung oder Distalisation von Molaren M im Kiefer; aber auch andere Seitenzähne im Ober- und Unterkiefer können mit der Vorrichtung 1 bzw. 101 behandelt werden, wenn beispielsweise eine versetzte Position der Zähne in der Bißstellung von Ober- und Unterkiefer zu korrigieren ist. Bei der Distalisation gemäß den Fig. 1 - 6 sollen regelmäßig die zu behandelnden Seitenzähne in Richtung des Pfeiles Pf 1 verlagert werden.

In den Figuren 1 bis 6 ist die Vorrichtung 1 zur Veranschaulichung in ein Oberkiefer-Modell 2 eingesetzt, welches mit Ausnahme der Zähne aus durchsichtigem Kunststoff besteht. Die Vorrichtung 1 gemäß Fig. 1 bis 3 greift über Anschlußstellen 3 an zwei beidseitig sich entsprechenden Molaren M, nämlich den vorderen, ersten Mahlzähnen (dens molares I) an, die hier die zu behandelnden Seitenzähne darstellen. Möglich ist auch, statt dieser Seitenzähne den jeweils zweiten Molarzahn (dens molares II) oder die vorderen Backenzähne (dens praemolares I u. II) zu distalisieren. Die an den zu behandelnden Seitenzähnen angreifenden Anschlußstellen 3 weisen hier die Molaren M umgebenden Molaren- oder Zahnbänder 4 auf. Diese Zahnbänder 4 werden an die jeweiligen Zähne formangepaßt und anzementiert. Anstelle der anzementierten Zahnbänder 4 können die Anschlußstellen 3 auch mittels einer Kunststoffklebeverbindung unmittelbar mit dem entsprechenden Zahn verbunden werden.
Die zur Verlagerung der Seitenzähne notwendige Distalisationskraft wird vor allem durch eine Spanneinrichtung 5 aufgebracht, die hier die Teile 5a und 5b aufweist und sich über ein Widerlager an mehreren Zähnen abstützt. Dieses ist dabei erfindungsgemäß als eine einen Zahnreihenbereich des zu behandelnden Kiefers 2 zumindest bereichsweise formangepaßt umgebende Widerlager-Zahnschiene 6 ausgebildet. Die Spanneinrichtung 5 verspannt die Widerlager-Zahnschiene 6 und die Anschlußstellen 3 gegeneinander und drückt sie auseinander. Wird die Vorrichtung 1 eine Zeit lang, beispielsweise über mehrere Stunden täglich, gewissenhaft getragen, so bewirkt die auf die zu behandelnden Zähne, im Ausführungsbeispiel die Molaren M, ausgeübte Distalisationskraft deren Verlagerung gegenüber den benachbarten, vorderen Zähnen. Im Ausführungsbeispiel nach Fig. 1 bis 3 umgibt die Widerlager-Zahnschiene 6 den vorderen Zahnreihenbereich und sie erstreckt sich bis zum einschließlich fünften Zahn, dem hinteren, zweiten Backenzahn (dens praemolares II) der rechten und linken Kieferhälfte, wie besonders gut aus Fig. 1 erkennbar. Um die Spanneinrichtung 5 sicher und kippfest gegen die Kraftrichtung Pf 1 der Distalisationskraft abstützen zu können, weist die Widerlager-Zahnschiene 6 eine dem Gaumen G formangepaßte, möglichst großflächige Gaumenplatte 7 auf. Trotz der sich aus der vorbeschriebenen Ausbildung bereits ergebenden sicheren Verankerung der Vorrichtung 1 im Kiefer kann diese Vorrichtung 1 auch vom Patienten leicht aus seinem Mund entnommen werden, da die Widerlager-Zahnschiene 6 lediglich über die zugehörigen Zähne geschoben, nicht aber beispielsweise durch eine Multibandtechnik zusätzlich am Kiefer befestigt ist.

Daher ist auch dem Patienten beispielsweise ein leichtes und einfaches Reinigen der Zähne sowie der Vorrichtung 1 gut möglich. Die Widerlager-Zahnschiene 6 ist zusammen mit der an den Gaumen G angepaßten Gaumenplatte 7 im wesentlichen einstückig und als tiefgezogenes Kunststoffteil hergestellt. Dadurch ist nicht nur die Herstellung vergleichsweise einfach, sondern die Widerlager-Zahnschiene 6 ist auch in sich verhältnismäßig stabil und findet in der Gebrauchsstellung einen sicheren Halt an den Zähnen, über die sie geschoben wird, sowie im dazu benachbarten Gaumenbereich. Die Spannvorrichtung 5 und namentlich der Spannvorrichtungsteil 5a ist über eine Steckverbindung lösbar mit den Seitenzahn-Anschlußstellen 3 verbunden. Diese weisen dazu an ihrer dem Mundhöhlen-Inneren abgewandten Seite jeweils eine etwa parallel zur Zahnreihe verlaufende Einschubhülse 8 od. dgl. Aufnahmeeinrichtung auf. In diese sind die dafür vorgesehenen Einsteckenden 9 eines zur Vorrichtung 1 gehörenden Außenbügels 10 einsteck- oder einschiebbar. Wie besonders gut aus Fig. 1 u. 4 erkennbar, ist der Außenbügel 10 -in der Draufsicht gesehen- unter Anpassung an die Kieferform und deren dem Außenbügel 10 benachbarten Zähnen etwa U- oder C-förmig ausgebildet, wobei die beiden freien Schenkel des Außenbügels 10 die Einsteckenden 9 für die Einsteckhülsen 8 bilden. Der Außenbügel 10 od .dgl. Kraftübertragungsbogen besteht im wesentlichen aus federelastischem Edelstahl-Draht von etwa 0,8 bis 2,0 mm Dicke, vorzugsweise von einer Dicke von 1,0 bis 1,3 mm. An diesen Einsteckenden 9 des Außenbügels 10 od. dgl. Kraftübertragungsbogen sind verstellbare, stellringartige Einsteckanschläge 11 vorgesehen, die jeweils mittels einer Stellschraube 12 auf den Einsteckenden 9 in einer gewünschten Lage festlegbar sind. In der Ausführung gemäß Fig. 1 bis 3 erkennt man gut, daß ein Quersteg 13 des Außenbügels 10 gerade ausgebildet ist und dort mit dem Zahnschienen-Widerlager 6 lösbar verbunden werden kann. Dazu weist dieses an seiner dem Gaumen G oder den Zähnen des zu behandelnden Kiefers abgewandten Seite eine Rastnut oder Rast-Rille 14 auf, in die der Quersteg 13 des Außenbügels einrastbar ist. Bei der Ausführung nach Fig. 1 sind die Endbereich der ebenfalls geraden Rast-Rille 14 etwa im Bereich des zweiten und dritten Zahnes (dens incisivus II und dens caninus) der linken und rechten Kieferhälfte vorgesehen, was platzmäßig vorteilhaft ist. Zum Erreichen einer möglichst sicheren Rastverbindung zwischen der Widerlager-Zahnschiene 6 und dem Außenbügel 10 der Spanneinrichtung 5 kann man dessen Quersteg 13 verstärkt ausbilden, z.B. mit einem Draht-Durchmesser von etwa 1,8 mm. Dem ist dann der lichte Durchmesser der zugehörigen Rast-Rille 14 angepaßt. Dagegen ist der Einsteckschlitz 15 der Rast-Rille 14 im Vergleich zur Dicke des Quersteges 13 schmaler ausgebildet, so daß der in der Rast-Rille 14 eingerastete Außenbügel 10 mit seinem Mittelabschnitt sicher in der Widerlager-Zahnschiene 6 gehalten ist. Quersteg 13 und zugehörige Rast-Rille 14 bilden dementsprechend eine lösbare Kupplung 36 zwischen der Widerlager-Zahnschiene 6 und dem Außenbügel 10.

Eine Möglichkeit gemäß der Erfindung, die zur Distalisation und Verlagerung der Seitenzähne notwendige Energie bei der Spanneinrichtung 5 zu schaffen, besteht bei der in Fig. 1 bis 3 dargestellten Vorrichtung darin, daß auf den Einsteckenden 9 des Außenbügels 10 zwischen den Einschubhülsen 8 und den Einsteckanschlägen 11 Druckfedern 16 vorgesehen sind. Deren Druckkraft ist entsprechend der Lagefixierung der Einsteckanschläge 11 veränderbar. Auch kann man Druckfedern 16 mit unterschiedlicher Federcharakteristik verwenden. Anstelle der Druckfeder 16 kann als Druckerzeuger auch ein Gummiröhrchen vorgesehen sein. Ebenso können jeweils bei einem Paar von Einschubhülse 8 und Einsteckanschlag 11 zwei sich gegenseitig abstoßende Magnete vorgesehen sein. Eine solche, im wesentlichen aus den Teilen 8, 16 bestehende Spanneinrichtung wird hier kurz "Spanneinrichtung 5a" genannt.
Die Spanneinrichtung 5 kann aber auch in Abwandlung der vorbeschriebenen Ausbildung der Druckerzeuger durch Druckfeder 16 oder Gummiröhrchen oder Magnete einen Druckerzeuger aufweisen, der dadurch gebildet ist, daß zwischen den Seitenzahnanschlußstellen 3 und der Kupplung 36 bzw. der Widerlager-Zahnschiene 6 elastische Zwischenelemente vorgesehen sind. Eine besonders vorteilhafte Ausbildung für derartige elastischen Zwischenelemente sind schlaufenartige Verformungen od. dgl. Federwicklungen 26, wie sie gut aus Fig. 1 bis 3 erkennbar sind. Solche elastisches Zwischenelemente wie diese Federwicklungen 26 sind nicht nur verhältnismäßig einfach in der Herstellung und leicht sauber zu halten. Man kann ihren Windungsverlauf auch derart ausbilden, daß sie in Betriebsstellung eine zusätzlich craniale Kraftkomponente auf die Widerlager-Zahnschiene 6 ausüben. "Craniale Kraftkomponente" bedeutet eine in Richtung des Schädels (nach oben) gerichtete Kraftkomponente, wie sie in Fig. 2 und 3 durch den Pfeil Pf 2 angedeutet ist. Eine solche Spanneinrichtungsausbildung wird nachstehend auch kurz "Spanneinrichtung 5b" genannt. Die mit ihr erzeugbare craniale Kraftkomponente begünstigt zusätzlich einen sicheren und festen Sitz der Widerlager-Zahnschiene 6 in der Betriebsstellung. Elastische Zwischenelemente wie die Federwicklungen 26 und Druckerzeuger, welche mit Druckfedern 16, Gummiröhrchen oder sich abstoßenden Magneten (Spanneinrichtung 5a) arbeiten, können jeweils für sich, aber auch in Kombination mit einer Spanneinrichtungsausführung 5b an der Vorrichtung 1 vorgesehen sein, wie es beispielsweise aus Fig. 1 bis 3 hervorgeht, wo sowohl Druckfedern 16 als auch Federwicklungen 26 zum Druckerzeugen vorgesehen sind. Wie erwähnt, sind die Federwicklungen 26 verhältnismäßig einfach herstell- und reinigbar. Bei der Ausführung mit der Druckfeder 16 oder einem Gummiröhrchen, das druckfederartig wirkt, ist ein verhältnismäßig einfaches und genaues Verändern der zur Wirkung kommenden Druckkraft gut möglich, z. B. durch Verstellen der Einsteckanschläge.

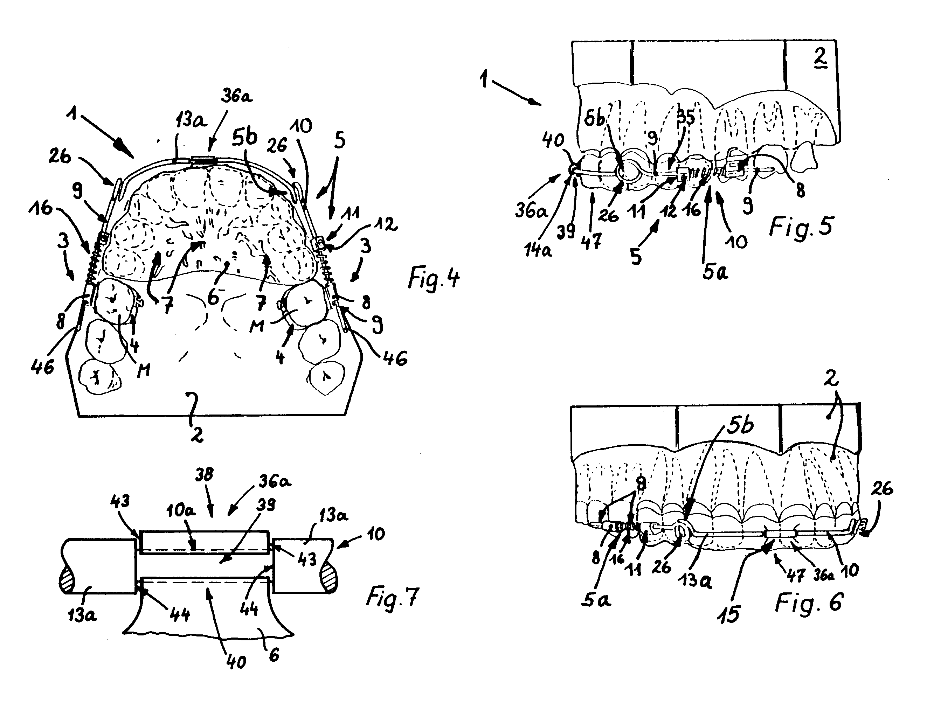

Die Führungs- oder Einschübshülsen 8 der Seitenzahn-Anschlußstellen sind, wie jeweils besonders gut aus Fig. 1 und 4 erkennbar, etwa parallel zur benachbarten Zahnreihe angeordnet bzw. die zugehörigen Zahnbänder 4 sind entsprechend an die zugehörigen Molaren M angeordnet und anzementiert. Dabei ist es besonders zweckmäßig, wenn die Lage der Einschubhülsen 8 derart auf die Lage der in Höhe der Schneidezahn-Vorderfläche angeordneten Kupplung 36 der Widerlager-Zahnschiene 6 abgestimmt sind, daß die Spanneinrichtung 5 in Betriebsstellung mit ihrem bei den Schneidzähnen befindlichen Quersteg 13 mindestens in Höhe der Kupplung 36a oder cranial davon zu liegen kommt. Wenn die Führungs- und Einschubhülsen 8 die Einsteckenden 9 des Außenbügels 10 entsprechend führen, erhält man zumindest keine Kraftkomponente, welche die Widerlager-Zahnschiene 6 von den Zähnen abzuheben sucht; in der Regel erhält man dann wieder in erwünschter Weise eine zusätzlich cranial gerichtete Kraftkomponente, welche einen festen Sitz der Widerlager-Zahnschiene 6 in Betriebsstellung auf den zugehörigen Zähnen begünstigt.

Die Vorrichtung kann nicht nur von der behandelnden Person, sondern auch vom Patienten selbst auf einfache Weise in den Mund eingesetzt werden, nachdem die Anschlußstellen 3 von der behandelnden Person angebracht worden sind. Dazu kann der Patient zunächst die Widerlager-Zahnschiene 6 auf den entsprechenden vorderen Zahnreihenbereich aufsetzen. Anschließend ist dann der Außenbügel 10 mit seinen Einsteckenden 9 in die Einschubhülsen 8 der Seitenzahn-Anschlußstellen 3 einzuführen und danach wird der Quersteg 13 des Außenbügels 10 bei der Kupplung 36 mit dem Widerlager 6 verbunden, das heißt, der Quersteg 13 wird in die Rast-Rille 14 der Widerlager-Zahnschiene 6 eingerastet. Dabei können die Einsteckanschläge 11 so gut auf den Einsteckenden 9 festgelegt sein, daß in Gebrauchsstellung der Vorrichtung 1 die die Einschubhülsen 8 und somit die Seitenzahn-Anschlußstellen 3 beaufschlagenden Druckfedern 16 die zur Erzeugung der Distalisationskraft der Zähne notwendige Energie in sich speichern. Diese Energie wird von den Druckfedern 16 der Spanneinrichtung 5a an die zu behandelnden, von den Zahnbändern 4 umgebenen Seitenzähne abgegeben, bis diese Druckfedern 16 od. dgl. Druckerzeuger wieder entspannt sind. Durch ein Verstellen der Einsteckanschläge 11 sowie durch ein Zusammendrücken z. B. der damit verbundenen Druckfedern 16 läßt sich die Vorrichtung 1 für eine nachfolgende Behandlungsphase aktivieren und neue Energie in das System einbringen.

Die Druckfedern 16 od. dgl. Druckelemente sind mit den Einsteck-Anschlägen 11 der Spanneinrichtung 5 lösbar verbunden und von den Einsteckenden 9 des Außenbügels durchsetzt. Die Verbindung der Druckfeder 16 od. dgl. Druckelement wie Gummiröhrchen oder Magnet mit den Einsteck-Anschlägen 11 hat für den Patienten den Vorteil einer einfacheren Handhabung der Spanneinrichtung 5a bzw. des Außenbügels 10 beim Herausnehmen aus dem Mund bzw. beim Wiedereinsetzen. Die Druckfeder 16 od. dgl. kann sich nicht in unbeabsichtigter Weise vom Außenbügel 10 entfernen und z. B. verlorengehen. Die Lösbarkeit der Verbindung zwischen der Druckfeder 16 od. dgl. Druckelement vom zugehörigen Einsteckanschlag hat für die behandelnde Person den Vorteil, daß solche Druckfedern 16, Gummiröhrchen oder Magnete leicht auswechselbar sind, also die Kraftgröße entsprechend der Ausgestaltung der Druckfeder 16 od. dgl. leicht auf die jeweiligen medizinisch angezeigten Bedürfnisse anzupassen ist. Die Federwicklungen 26 des Außenbügels 10 erleichtern auch dessen Handhabbarkeit beim Einsetzen in die Einschubhülsen 8 der Anschlußstellen 3. Besonders aus Fig. 3 ist gut erkennbar, daß die Vorrichtung 1 nur bei näherer Betrachtung von außen her sichtbar ist. Dies begünstigt die Akzeptanz beim Patienten und damit auch den mit Hilfe der Vorrichtung 1 zu erzielenden Behandlungserfolg.

Zur Herstellung der Rast-Rille 14 in der Widerlager-Zahnschiene 6 kann beispielsweise vor dem Tiefziehvorgang ein Platzhalter-Röhrchen auf der Verbindungslinie zwischen dem zweiten und dem dritten Zahn der rechten und linken Kieferhälfte plaziert werden, daß nach dem Tiefziehvorgang wieder entfernt wird. Anschließend kann man die so in der Widerlager-Zahnschiene geschaffene Röhre z. B. mit einer Rundfräse der Länge nach in definierter Breite aufschlitzen und man erhält die erwähnte Rast-Rille 14 der Kupplung 36.

In den Fig. 4 bis 7 sind weitere erfindungsgemäße Vorrichtungen 1 mit abgewandelten Weiterbildungen dargestellt. Dort ist anstelle des geraden Quersteges 13, der durch die Widerlager-Zahnschiene 6 geführt ist, ein gebogener Quersteg 13a vorne außen um die Schneidzähne und die Widerlager-Zahnschiene 6 herumgeführt. Diese weist etwa in ihrem vordersten Bereich eine Kupplung 36a auf, die in Seitenansicht, ähnlich wie die Rast-Rille 14 im Querschnitt, hakenförmig ausgebildet ist. Dabei weist die Hakenöffnung 39 bei der am Oberkiefer(-modell) 2 angeordneten Vorrichtung 1 nach unten. Dabei steht der Kupplungsabschnitt 40 nasenförmig etwas aus der Vorderfläche der Widerlager-Zahnschiene 6 vor. Die Kupplung 36a mit ihrer Hakenöffnung 39 ist im übrigen so kontouriert, wie es bereits im Zusammenhang mit der Rast-Rille 14 beschrieben wurde, so daß auch bei der Ausführung nach Fig. 4 bis 7 zusätzlich nach oben gerichtete Kraftkomponenten entsprechend den Pfeilen Pf 2 in Fig. 2 und 3 von der Kupplung 36a gut aufgenommen werden können. Die Ausbildung mit der hakenartigen Kupplung 36a gemäß Fig. 4 bis 7 ist vom Patienten deshalb besonders leicht zu handhaben, weil er die Lage der Hakenöffnung 39 besonders leicht finden und gleichzeitig den Quersteg 13a gut handhaben kann.

Eine besonders vorteilhafte Weiterbildung ist noch aus Fig. 7 zu erkennen : Dort ist der Außenbügel 10 der Spanneinrichtung 5 bei seiner Kupplung 36a gegenüber der Widerlager-Zahnschiene 6 gegen Querverschiebung gesichert. Dies ist im Ausführungsbeispiel dadurch realisiert, daß der Aufnahmebereich 38 der Widerlager-Zahnschiene 6 mit einer entsprechend engeren Rastrille 14a einen im Durchmesser verjüngten Abschnitt 10a des Außenbügels umgreift. Mit seinen Seitenflanken 43 kann dann der Kupplungsteil 36a der Widerlager-Zahnschiene 6 die Kreisringflächen am Außenbügel 10 gegen Seitenverschiebung festlegen. Der verjüngte Abschnitt 10a des Außenbügels 10 wird also muffenartig von dem die Kupplung 36a bildenden Teil der Widerlager-Zahnschiene 6 umgriffen und seitlich arretiert. Dabei bleibt die Funktion der Kupplung 36a, die nach unten offen ist und ein Einführen des Außenbügels 10 von dort erlaubt, im übrigen erhalten. Die insbesondere aus Fig. 7 erkennbare Ausbildung der Seitenfixierung des Außenbügels 10 hat den Vorteil, daß unterschiedliche Belastungen, die zu unerwünschten Verschiebungen des Außenbügels 10 in seitlicher Richtung führen könnten, verhindert werden.

Aus Fig. 2 und 5 ist noch besonders gut erkennbar, daß die einen Zahnreihenbereich formangepaßt umgebende Widerlager-Zahnschiene 6 auf ihrer der Kauebene zugewandten Seite 47 ein Gegenrelief aufweist, welches in Gebrauchsstellung der Vorrichtung 1 ein Zahnreihenbereich des Gegenkiefers aufnimmt. Dadurch kann man die Widerlager-Zahnschiene 6 -wenn dies gewünscht wird- bedarfsweise den natürlichen Gegenprofil und damit den natürlichen Kauverhältnissen anpassen. Dies kann zumindest während bestimmter Perioden des Einsatzes der Vorrichtung 1 vorteilhaft sein.

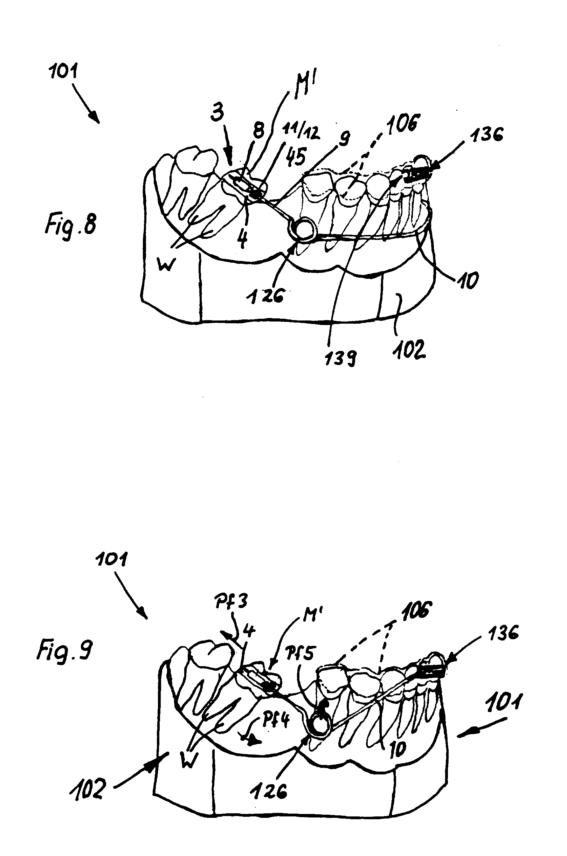

In den Fig. 8 und 9 ist noch eine abgewandelte Vorrichtung 101 in Verbindung mit einem Unterkiefer (-modell) 102 dargestellt. Aus Fig. 4 erkennt man, daß die beiden am Außenbügel 10 angeordneten Spanneinrichtungen 5 jeweils im wesentlichen aus der Einschubhülse 8, der Druckfeder 16 und dem Einsteckanschlag 11 bestehen. Bei der Ausführung der Vorrichtung 101 gemäß Fig. 8 u. 9 erkennt man, daß die Druckspannung im wesentlichen von einem am Außenbügel 10 angeordneten Zwischenelement gebildet ist. Dies ist im Ausführungsbeispiel nach Fig. 8 und 9 wiederum durch eine Federwicklung 126 realisiert, die lediglich in der Art und Weise ihrer Wicklung auf die hier vorliegenden besonderen Bedürfnisse abgestimmt ist. M′ ist ein Zahn, dessen vorderer Nachbarzahn fehlt. Deshalb ist M′ nach vorne in die entsprechende Zahnlücke 45 abgekippt. Man kann nun gut mit der Vorrichtung 101, die an jedem Schenkel des Außenbügels 10 eine Federwicklung 126 od. dgl. elastisches Zwischenelement aufweist, eine Kraft auf den Zahn M′ ausüben, der ihn wieder aufrichtet.

Erfahrungsgemäß wird das Aufrichten des Zahnes M′ überwiegend von einem Nach-Vorne-Kommen der Zahnwurzel W begleitet. Es ergibt sich gewissermaßen eine Kipp- oder Drehbewegung, bei der die z. B. mit dem Zahnband 4 umfaßte Krone des Zahnes M′ sich mehr in Richtung des Pfeiles Pf 3 nach hinten und die Wurzel W des Zahnes M′ etwa in Richtung des Pfeiles Pf 4 (vgl. Fig.9) verschiebt. Die Widerlager-Zahnschiene 106 ist dabei analog der in den Figuren 1 bis 7 beschriebenen Widerlager-Zahnschiene 6 ausgebildet mit der Maßgabe, daß die Hakenöffnung 139 der Kupplung 136 der speziellen Belastungsrichtung des Außenbügels 10 bei der Vorrichtung 101 angepaßt ist. Dazu zeigt Fig. 8 eine zur Anwendung an einen Unterkiefer-Modell 102 vorgesehenen Außenbügel 10 in entspannter Stellung. Die Einsteckenden 9 des Außenbügels 10, von denen in Fig. 8 und 9 jeweils nur einer sichtbar ist, befindet sich in der jeweiligen Einschubhülse 8, die zur Anschlußstelle 3 gehört, über das Zahnband 4 mit dem Zahn M′ verbunden ist. Im übrigen wird auf die entsprechenden, im Zusammenhang mit Fig. 1 bis 7 beschriebenen Einzelheiten verwiesen. In der Betriebsstellung ist nun gemäß Fig. 9 der vordere, bogenförmige Teil des Außenbügels 10 angehoben und in die an der Widerlager-Zahnschiene 106 einstückig angeordnete Kupplung 136 eingerastet. Die Federwicklung 126 im Außenbügel 10 ist im ruhenden Zustand (Fig. 8) derart ausgebildet, daß sie im gespannten Zustand (Fig. 9) eine Kraft in Richtung des Pfeiles Pf 5 gemäß Fig.9 auszuüben sucht. Daraus ergibt sich der Krafteinfluß auf den in seiner Lage zu verändernden Zahn M′, dessen Lageveränderung während der Behandlung durch die Vorrichtung 101 durch die Pfeile Pf 3 und Pf 4 in Fig. 9 angedeutet ist.

Wenn man nicht nur ein Aufrichten des Zahnes M 1 durch Rückschwenken der Zahnkrone unter überwiegendem Nach-Vorne-Schwenken der Zahnwurzel W, sondern wünscht, daß der Zahn M′ nicht nur aufgerichtet, sondern insgesamt im wesentlichen hinten ortsständig bleibt, kann man die Vorrichtung 101 gleichzeitig mit der vorbeschriebenen Federwicklung 126 auch noch mit einer axial bei den Schenkeln des Außenbügels 10 wirkenden Spanneinrichtung 5a versehen, welche neben der sowieso vorhandenen Einschubhülse 8 auch noch eine Druckfeder 16 od. dgl. sowie einen Einsteckanschlag 11 aufweist. Eine solche, im wesentlichen linear entlang den Seitenschenkeln 46 des Außenbügels 10 im wesentlichen linear wirkende Spanneinrichtung mit den vorerwähnten Teilen 8, 16 od. dgl. und 11, stellt hier eine "lineare Spanneinrichtung 5a" dar (vgl. Fig. 4). Eine solche lineare Spanneinrichtung 5a ist in den Figuren 8 und 9 der besseren Übersicht wegen nicht gezeichnet, sie entspricht jedoch den (linear wirkenden) Spanneinrichtungen 5a, wie sie beispielsweise in den Figuren 1 bis 6 angedeutet und vorstehend näher beschrieben sind.

Die Widerlager-Zahnschiene 6, 106 kann -anstelle eines tiefgezogenen Kunststoffteils- ein individuell hergestelltes Kunststoffteil mit entsprechenden Halteelementen aufweisen. Die Ausbildung der Widerlager-Zahnschiene 6, 106 mittels eines tiefgezogenen Kunststoffteils ist jedoch, insbesondere aus fertigungstechnischen Gründen, besonders vorteilhaft.

Alle vorbeschriebenen und/oder in den Ansprüchen aufgeführten Einzelmerkmale können einzeln oder in beliebiger Kombination miteinander erfindungswesentlich sein.

## Patentansprüche

1. Vorrichtung (1, 101) zur kieferorthopädischen Zahnbehandlung, insbesondere zur Verlagerung oder Distalisation von Molaren (M) im Kiefer, mit an den zu behandelnden Seitenzähnen angreifenden Anschlußstellen (3) sowie zumindest einer an Zähnen angreifenden Widerlager-Zahnschiene (6, 106), wobei die Anschlußstellen und die Widerlager-Zahnschiene zur Verlagerung der Seitenzähne über eine Spanneinrichtung (5) oder dergleichen Distanzhalter gegeneinander verspannt und/oder auseinandergedrückt sind, **dadurch gekennzeichnet,** daß die Widerlager-Zahnschiene (6, 106) auf einen Zahnreihenbereich des zu behandelnden Kiefers aufschiebbar ist und diesen zumindest bereichsweise formangepaßt umgibt und daß die Widerlager-Zahnschiene (6, 106) eine den Gaumen oder dem an die Zahnreihe angrenzenden Unterkieferbereich formangepaßte Stützplatte aufweist, die einstückig mit der Widerlager-Zahnschiene (6, 106) verbunden ist.

2. Vorrichtung nach Anspruch 1, dadurch gekennzeichnet, daß die Widerlager-Zahnschiene (6, 106) den vorderen Zahnreihenbereich umgibt und sich beidseitig vorzugsweise bis zum einschließlich fünften Zahn der rechten und der linken Kieferhälfte erstreckt.

3. Vorrichtung nach Anspruch 1 oder 2 dadurch gekennzeichnet, daß die Widerlager-Zahnschiene (6, 106) im wesentlichen ein tiefgezogenes Kunststoffteil ist oder aus einem herkömmlich hergestellten individuellen Kunststoffteil mit Halteelementen besteht.

4. Vorrichtung nach wenigstens einem der Ansprüche 1 bis 3, dadurch gekennzeichnet, daß die Spanneinrichtung (5), ihr Außenbügel (10) od. dgl. Kraftübertragungsbogen über eine vorzugsweise steckbare Verbindung lösbar mit den Seitenzahn-Anschlußstellen (3) verbunden ist, die zweckmäßigerweise die Seitenzähne umgebende Zahnbänder (4) od. dgl. Zahnbefestigungsmittel aufweisen.

5. Vorrichtung nach wenigstens einem der Ansprüche 1 bis 4, dadurch gekennzeichnet, daß die Seitenzahn-Anschlußstellen (3) jeweils eine etwa parallel zur benachbarten Zahnreihe verlaufende Einschubhülse (8) od. dgl. Aufnahmeeinrichtung für die Einsteckenden (9) aufweisen, die in diesen Einschubhülsen (8) verschiebbar sind, wobei die Lage der Einschubhülsen derart an die Lage einer in Höhe der Schneidezahn-Vorderfläche angeordneten Kupplung (36, 36a, 136) der Zahnschiene (6, 106) abgestimmt ist, daß die Spanneinrichtung (5) in Betriebsstellung mit ihrem bei den Schneidezähnen befindlichen Quersteg (13, 13a) mindestens in Höhe der Kupplung (36) von dem Außenbügel (10) und der Zahnschiene (6, 106) oder cranial davon zu liegen kommt.

6. Vorrichtung nach wenigstens einem der Ansprüche 1 bis 5, dadurch gekennzeichnet, daß bei den Einschubhülsen (8) od. dgl. Verbindungsteilen der Spanneinrichtung (5) Einsteckanschläge (11) vorgesehen sind, die vorzugsweise von jeweils an den Einsteckenden (9) angeordneten, insbesondere verstellbaren Anschlägen gebildet sind, wobei zwischen jeder Einschubhülse (8) und dem zugehörigen Einsteckanschlag (11) eine Druckfeder (16) od. dgl. Druckerzeuger vorgesehen ist.

7. Vorrichtung nach wenigstens einem der Ansprüche 1 bis 6, dadurch gekennzeichnet, daß die Spanneinrichtung (5) als Spannmittel in ihren zwischen den Seitenzahn-Anschlußstellen (3) und der Widerlager-Zahnschiene (6, 106) angeordneten Bereich elastische Zwischenelemente aufweist, die vorzugsweise als schlaufenartige Verformung, Federwicklungen (26, 126) od. dgl. ausgebildet sind, deren Windungsverlauf gegebenenfalls derart ausgebildet ist, daß sie in Betriebsstellung eine zusätzliche craniale Kraftkomponente auf die am Oberkiefer (2) befindliche Widerlager-Zahnschiene (6) ausüben oder eine entgegengesetzt gerichtete Kraftkomponente auf die am Unterkiefer (102) befindliche Widerlager-Zahnschine (106).

8. Vorrichtung nach wenigstens einem der Ansprüche 1 bis 7, dadurch gekennzeichnet, daß die Spanneinrichtung (5) einen offenen, vorzugsweise etwa U- oder C-förmigen Außenbügel (10) aufweist, dessen beide freie Seitenschenkel (46) als Einsteckenden (9) ausgebildet sind und der im Quersteg (13, 13a) seiner U- oder C-Form mit der Zahnschiene (6, 106) lösbar verbunden, vorzugsweise verrastbar ist.

9. Vorrichtung nach wenigstens einem der Ansprüche 1 bis 8, dadurch gekennzeichnet, daß die Widerlager-Zahnschiene (6) an ihrer dem Gaumen (G) oder den Zähnen des zu behandelnden Kiefers abgewandten Außenseite als Kupplung (36, 36a, 136a) zur Spanneinrichtung (5) eine Rast-Rille (14) od. dgl. (14a,139) aufweist, in die ein Quersteg od. dgl. (13, 13a) oder ein Abschnitt davon (10a) des Außenbügels (10) lösbar einkuppelbar ist.

10. Vorrichtung nach wenigstens einem der Ansprüche 1 bis 9, dadurch gekennzeichnet, daß die Druckfedern (16) od. dgl. Druckelemente mit den Anschlägen (11) der Spanneinrichtung (5) lösbar zu verbinden und von den Einsteckenden (9) des Außenbügels (10) durchsetzt sind.

11. Vorrichtung nach wenigstens einem der Ansprüche 1 bis 10, dadurch gekennzeichnet, daß der Außenbügel (10) der Spanneinrichtung (5) bei seiner Kupplung (36a) gegenüber der Widerlager-Zahnschiene (6, 106) gegen Querverschiebung gesichert ist, vorzugsweise dadurch, daß ein Aufnahmebereich (38) der Widerlager-Zahnschiene (6) mit anschlagartigen Seitenflanken (43) sowie entsprechend enger Rast-Rille (14a) od. dgl. versehen ist und einen verjüngten Abschnitt (10a) des Außenbügels (10), der seitlich durch anschlagartige Kreisringflächen (44) begrenzt ist, umgreift und ihn gegen Seitenverschiebung festlegt.

12. Vorrichtung nach wenigstens einem der Ansprüche 1 bis 11, dadurch gekennzeichnet, daß die einen Zahnreihenbereich formangepaßt umgebende Widerlager-Zahnschiene (6, 106) auf ihrer der Kauebene zugewandten Seite (47) ein Gegenrelief aufweist, welches in Gebrauchsstellung der Vorrichtung (1, 101) einen Zahnreihenbereich des Gegenkiefers aufnehmen kann.

13. Vorrichtung nach wenigstens einem der vorstehenden Ansprüche dadurch gekennzeichnet, daß der Außenbügel (10) der Vorrichtung (101) zumindest auf der Seite des zu behandelnden Molaren (M') ein elastisches Zwischenelement als Distanzhalter aufweist, das zur Aufrichtung eines mesial gekippten Molaren (M') eine Aufrichtkraft auf den zu behandelnden Molaren (M') ausübt.

14. Vorrichtung nach Anspruch 13, dadurch gekennzeichnet, daß das elastische Zwischenelement des Außenbügels (10) als Federwicklung ausgebildet ist.

15. Vorrichtung nach Anspruch 13 oder 14, dadurch gekennzeichnet, daß an den mit dem aufzurichtenden Zahn (M 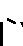 ) in Verbindung stehenden Seitenschenkel des Außenbügels (10) zusätzlich eine linear wirkende Spanneinrichtung (5a) vorgesehen ist.

## Claims

1. An orthodontic treatment device (1, 101), particularly for moving or distalizing molars (M) in the jaw, including points of attachment (3) engaging with the lateral teeth to be treated, as well as at least one dental abutment bar (6, 106) engaging with teeth, the points of attachment and the dental abutment bar being braced towards and/or urged apart from one another by way of a tensioning device (5) or like spacer for moving the lateral teeth, characterized in that the dental abutment bar (6, 106) is adapted to be pushed onto a zone of the row of teeth of the jaw to be treated and is adapted in shape to and encompasses at least areas of said zone, and that the dental abutment bar (6, 106) has integrally connected thereto a support plate adapted in shape to the palate or to the mandible area bordering the row of teeth.

2. A device as claimed in claim 1, characterized in that the dental abutment bar (6, 106) encompasses the anterior zone of a row of teeth and extends on both sides preferably up to and including the fifth tooth of the right and left halves of the jaw.

3. A device as claimed in claim 1 or claim 2, characterized in that the dental abutment bar (6, 106) is essentially a deep-drawn plastic part or consists of a conventionally produced individual plastic part with holding elements.

4. A device as claimed in at least one of claims 1 to 3, characterized in that the tensioning device (5), the outer bow thereof or like arch for the transfer of force is detachably joined by way of a preferably pluggable connection to the points of attachment (3) to the lateral teeth, said points of attachment suitably having tooth bands (14) encircling the lateral teeth, or like fasteners.

5. A device as claimed in at least one of claims 1 to 4, characterized in that the points of attachment (3) to the lateral teeth in each case have a socket (8) running approximately parallel to the adjacent row of teeth, or a like female component for the slip-in ends (9) slidable into said sockets (8), the position of the sockets being coordinated to the position of a coupling (36, 36a, 136) belonging to the dental bar (6, 106) and arranged on a level with the front of the incisors, said coordination being effected such that in the operating position the tensioning device (5) with the crosspiece (13, 13a) thereof situated at the incisors is at least at the level of the coupling (36) of the outer bow (10) and the dental bar (6, 106) or in the cranial direction thereof.

6. A device as claimed in at least one of claims 1 to 5, characterized in that the sockets (8) or like links of the tensioning device (5) are provided with stops (11), preferably in the form of ones arranged at the slip-in ends (9), particularly adjustable ones, a pressure spring (16) or like means generating pressure being provided between each socket (8) and the associated stop (11).

7. A device as claimed in at least one of claims 1 to 6, characterized in that the tensioning device (5) has in its zone disposed between points of attachment (3) to lateral teeth and the dental abutment bar (6, 106) elastic intermediate elements as tensioners, said intermediate elements preferably being of loop-like configuration, in the form of spring windings (26, 126) or the like, the course of the turns thereof possibly being such that in the operating position they exert an additional cranial force component upon the dental abutment bar (6) situated at the maxilla (2) or an oppositely directed force component upon the dental abutment bar (106) situated at the mandible (102).

8. A device as claimed in at least one of claims 1 to 7, characterized in that the tensioning device (5) has an open, preferably approximately U or C-shaped outer bow (10) whose two free side limbs (46) take the form of slip-in ends (9), said bow in the crosspiece (13, 13a) of its U or C-shape being detachably connected, preferably interlockable, with the dental bar (6, 106).

9. A device as claimed in at least one of claims 1 to 8, characterized in that the dental abutment bar (6) has at its surface averted from the palate (G) or teeth of the jaw to be treated a snap-in groove (14) or the like (14a, 139) as a coupling (36, 36a, 136a) to the tensioning device (5), a crosspiece or the like (13, 13a) or a portion thereof (10a) of the outer bow (10) being detachably engageable therein.

10. A device as claimed in at least one of claims 1 to 9, characterized in that the pressure springs (16) or like pressure elements are to be detachably connected to the stops (11) of the tensioning device (5) and are traversed by the slip-in ends (9) of the outer bow (10).

11. A device as claimed in at least one of claims 1 to 10, characterized in that the coupling (36a) of the outer bow (10) of the tensioning device (5) is safeguarded against transverse displacement relative to the dental abutment bar (6, 106), preferably in that a receiving zone (38) of the dental abutment bar (6) is provided with stop-like side flanks (43) and a correspondingly narrow snap-in groove (14a) or the like and embraces and locates against lateral displacement a tapered portion (10a) of the outer bow (10) laterally limited by stop-like ring faces (44).

12. A device as claimed in at least one of claims 1 to 11, characterized in that the dental abutment bar (6, 106) adapted in shape to and encompassing a zone of the row of teeth has on its side (47) facing the masticatory level a counter-relief which in the position of use of the device (1, 101) is capable of receiving a zone of the row of teeth of the counter jaw.

13. A device as claimed in at least one of the preceding claims, characterized in that the outer bow (10) of the device (101) has at least on the side of the molar (M') to be treated an elastic intermediate element as a spacer which, for setting a mesially inclined molar (M') upright, exerts a righting force on the molar (M') to be treated.

14. A device as claimed in claim 12, characterized in that the elastic intermediate element of the outer bow (10) takes the form of a spring winding.

15. A device as claimed in claim 13 or claim 14, characterized in that a linearly acting tensioning device (5a) is additionally provided at the side limbs which form part of the outer bow (10) and are connected to the tooth (M) to be set upright.

## Revendications

1. Dispositif de traitement orthodontique (1, 101), en particulier pour déplacer ou pour séparer des molaires (M) dans la mâchoire, comprenant des points d'attache (3) en prise avec les dents de côté à traiter, ainsi qu'au moins un rail dentaire formant contre-appui (6, 106) en prise avec des dents, les points d'attache et le rail dentaire formant contre-appui étant poussés l'un vers l'autre et/ou écartés l'un de l'autre par l'intermédiaire d'un dispositif de serrage (5) ou d'un écarteur similaire en vue de déplacer les dents de côté, caractérisé par le fait que le rail dentaire formant contre-appui (6, 106) peut être enfoncé sur une partie de la rangée de dents de la mâchoire à traiter pour entourer celle-ci en épousant sa forme, du moins partiellement, et par le fait que le rail dentaire formant contre-appui (6, 106) comporte une plaque d'appui qui épouse la forme du palais ou de la partie de la mâchoire inférieure adjacente à la rangée de dents et qui est reliée d'un seul tenant au rail dentaire formant contre-appui (6, 106).

2. Dispositif selon la revendication 1, caractérisé par le fait que le rail dentaire formant contre-appui (6, 106) entoure la partie antérieure de la rangée de dents, et qu'il s'étend des deux côtés, de préférence jusqu'à inclusivement la cinquième dent des moitiés de droite et de gauche de la mâchoire.

3. Dispositif selon la revendication 1 ou 2, caractérisé par le fait que le rail dentaire formant contre-appui (6, 106) est constitué pour l'essentiel par une pièce en matière plastique emboutie, ou qu'il est constitué par une pièce en matière plastique individuelle qui est fabriquée de manière habituelle et qui est pourvue d'éléments d'arrêt.

4. Dispositif selon l'une au moins des revendications 1 à 3, caractérisé par le fait que le dispositif de serrage (5), son étrier extérieur (10) ou un arc similaire de transmission des forces est relié d'une manière amovible aux points d'attache (3) des dents de côté par l'intermédiaire d'une liaison, de préférence par enfoncement, ceux-ci étant avantageusement des bandeaux (4) ou des moyens de fixation sur les dents similaires qui entourent les dents de côté.

5. Dispositif selon l'une au moins des revendications 1 à 4, caractérisé par le fait que les points d'attache (3) des dents de côté comportent à chaque fois un manchon à enfoncement (8) s'étendant à peu près parallèlement à la rangée de dents voisine, ou un réceptacle similaire destiné à des extrémités à enficher (9) qui peuvent coulisser dans ces manchons à enfoncement (8), cependant que la position des manchons à enfoncement est adaptée à la position d'un accouplement (36, 36a, 136) du rail dentaire (6, 106) qui est disposé au niveau de la surface antérieure des incisives d'une manière telle qu'en position de fonctionnement, le dispositif de serrage (5), par sa traverse (13, 13a) qui se trouve du côté des incisives, vienne se placer au moins au niveau de l'accouplement (36) de l'étrier extérieur (10) et du rail dentaire (6, 106), ou en étant décalé vers le crâne par rapport à ce niveau.

6. Dispositif selon l'une au moins des revendications 1 à 5, caractérisé par le fait qu'il est prévu sur les manchons à enfoncement (8), ou sur des pièces de liaison similaires du dispositif de serrage (5) des butées d'enfichage (11) qui sont constituées de préférence par des butées disposées sur chaque extrémité à enficher (9), et qui peuvent être en particulier déplacées, un ressort de compression (16) ou un organe similaire engendrant une pression étant prévu entre chaque manchon à enfoncement (8) et la butée d'enfichage associée (11).

7. Dispositif selon l'une au moins des revendications 1 à 6, caractérisé par le fait que le dispositif de serrage (5) comporte, dans sa zone située entre les points d'attache (3) des dents de côté et le rail dentaire formant contre-appui (6, 106), des éléments intermédiaires élastiques qui servent de moyen de serrage et qui sont réalisés de préférence sous la forme d'une déformation en forme de boucle, de spires de ressort (26, 126) ou similaires, dont le tracé de l'enroulement est réalisé le cas échéant d'une manière telle qu'en position de fonctionnement, elles exercent sur le rail dentaire formant contre-appui (6) placé sur la mâchoire supérieure (2) une composante de force supplémentaire qui est dirigée vers le crâne, ou qu'elles exercent sur le rail dentaire formant contre-appui (106) placé sur la mâchoire inférieure (102) une composante de force qui est dirigée en sens opposé.

8. Dispositif selon l'une au moins des revendications 1 à 7, caractérisé par le fait que le dispositif de serrage (5) comporte un étrier extérieur ouvert (10) qui présente de préférence la forme approximative d'un U ou d'un C, dont les deux branches latérales libres (46) sont réalisées sous la forme d'extrémités à enficher (9) et qui peut être relié au rail dentaire formant contre-appui (6, 106) d'une manière amovible, de préférence par encliquetage, par la partie transversale (13, 13a) de sa forme en U ou en C.

9. Dispositif selon l'une au moins des revendications 1 à 8, caractérisé par le fait que le rail dentaire formant contre-appui (6) comporte, sur son côté extérieur opposé au palais (G) ou aux dents de la mâchoire à traiter, une rainure d'encliquetage (14) ou similaire (14a, 139) qui sert d'accouplement (36, 36a, 136a) avec le dispositif de serrage (5) et dans laquelle on peut encliqueter d'une manière amovible une partie transversale ou similaire (13, 13a) de l'étrier extérieur (10) ou une section (10a) de celle-ci.

10. Dispositif selon l'une au moins des revendications 1 à 9, caractérisé par le fait que les ressorts de compression (16) ou les organes similaires exerçant une pression peuvent être reliés d'une manière amovible aux butées (11) du dispositif de serrage (5), et qu'ils sont traversés par les extrémités à enficher (9) de l'étrier extérieur (10).

11. Dispositif selon l'une au moins des revendications 1 à 10, caractérisé par le fait que l'étrier extérieur (10) du dispositif de serrage (5) est bloqué par rapport au rail dentaire formant contre-appui (6, 106) contre les déplacements transversaux lors de son accouplement (36a), et ce de préférence, grâce au fait qu'une partie réceptrice (38) du rail dentaire formant contre-appui (6) est pourvue de bords latéraux (43) analogues à des butées, ainsi que d'une rainure d'encliquetage (14a) ou similaire qui est plus étroite en proportion, et qu'elle entoure une partie rétrécie (10a) de l'étrier extérieur (10) qui est délimitée latéralement par des surfaces annulaires (44) analogues à des butées et qui la fixe à l'encontre des déplacements latéraux.

12. Dispositif selon l'une au moins des revendications 1 à 11, caractérisé par le fait que le rail dentaire formant contre-appui (6, 106) qui entoure une partie d'une rangée de dents en épousant sa forme présente, sur sa face (47) qui est tournée vers le plan d'occlusion, un relief conjugué qui peut recevoir une partie de la rangée de dents de la mâchoire opposée dans la position d'utilisation du dispositif (1, 101).

13. Dispositif selon l'une au moins des revendications précédentes, caractérisé par le fait que l'étrier extérieur (10) du dispositif (101) comporte, du moins du côté de la molaire à traiter (M'), un élément intermédiaire élastique qui sert de dispositif d'écartement et qui, en vue de redresser une molaire (M') ayant basculé vers le centre, exerce une force de redressement sur la molaire & traiter (M').

14. Dispositif selon la revendication 13, caractérisé par le fait que l'élément intermédiaire élastique de l'étrier extérieur (10) est réalisé sous la forme d'un ressort spiral.

15. Dispositif selon la revendication 13 ou 14, caractérisé par le fait qu'un dispositif de serrage à action linéaire (5a) est prévu en outre sur la branche latérale de l'étrier extérieur (10) qui est reliée à la dent à redresser (M').
